(19) Europäisches Patentamt
European Patent Office
Office européen des brevets

(11) **EP 1 901 932 B1**

(12) **FASCICULE DE BREVET EUROPEEN**

(45) Date de publication et mention
de la délivrance du brevet:
**19.10.2011 Bulletin 2011/42**

(21) Numéro de dépôt: **06779001.4**

(22) Date de dépôt: **30.06.2006**

(51) Int Cl.:
**B60G 17/016** (2006.01)

(86) Numéro de dépôt international:
**PCT/FR2006/050658**

(87) Numéro de publication internationale:
**WO 2007/003858 (11.01.2007 Gazette 2007/02)**

(54) **PROCEDE ET SYSTEME ANTI-ROULIS D'UN VEHICULE ET VEHICULE CORRESPONDANT**

ANTIROLLVERFAHREN UND -SYSTEM FÜR EIN FAHRZEUG UND ENTSPRECHENDES FAHRZEUG

ANTI-ROLLING METHOD AND SYSTEM FOR A VEHICLE AND CORRESPONDING VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.07.2005 FR 0507115**

(43) Date de publication de la demande:
**26.03.2008 Bulletin 2008/13**

(73) Titulaire: **Renault SAS**
**92100 Boulogne Billancourt (FR)**

(72) Inventeurs:
• **BULTEAU, Benoît**
**B-1348 Louvain-la-Neuve (BE)**
• **POTHIN, Richard**
**F-78760 Jouars-Pontchartrain (FR)**

(56) Documents cités:
**EP-A- 0 933 239     EP-A- 1 346 856**
**EP-A- 1 449 743     EP-A- 1 568 521**
**EP-A- 1 600 313     US-B1- 6 354 607**

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule, et des roues arrière directrices ou non-directrices.

Le document US 2004/0117085 décrit un système de commande de la stabilité en lacet d'un véhicule équipé d'un capteur d'accélération latérale, d'un capteur de roulis, d'un capteur d'angle de braquage et d'au moins un capteur de vitesse fournissant des informations à une unité de commande de la stabilité de lacet, une unité de commande à la stabilité de roulis et une unité de fonction de la priorité et d'intégration permettant de commander un système de suspension active et un système de barre anti-roulis active.

Le document US 2004/0117071 décrit un procédé de limitation du roulis d'un véhicule avec une correction de type proportionnelle, dérivée et dérivée seconde et un signal de commande envoyé à un système de commande de freinage ou envoyé à un système de commande de braquage.

Il est également connu, par le document EP 1 600 313, un dispositif de commande de barres stabilisatrices par un moteur pour un véhicule où une unité de contrôle électronique peut agir sur le moteur à partir de l'accélération latérale du véhicule, de la vitesse longitudinale du véhicule, ainsi que de l'angle de braquage afin de supprimer le roulis.

On connaît également, par le document EP 1 568 521, un appareil de commande de la rigidité d'une barre stabilisatrice à partir de différents paramètres tels la vitesse de lacet, l'angle de braquage, l'accélération longitudinale, l'accélération latérale réelle, où une estimation de cette accélération latérale est effectuée afin de corriger la commande de la rigidité de la barre et tenir compte de l'état de surface de la route.

Le document EP 1 346 856 décrit un système pour déterminer l'angle de roulis d'un véhicule, à partir de l'accélération latérale, de la vitesse de lacet, de la vitesse longitudinale du véhicule, de l'angle de volant de direction, ainsi que d'une vitesse de roulis.

Enfin, le document US 6,354,607, qui forme l'etat de la technique le plus proche selon le préambule de la revendication 1, décrit un procédé de contrôle du roulis d'un véhicule comprenant un actionneur capable d'agir sur le roulis, dans lequel on estime un état de roulis et on élabore une consigne de rejet asymptotique des perturbations agissant sur le roulis.

Toutefois, ces systèmes nécessitent de nombreux capteurs et procurent au véhicule un comportement insuffisamment stable lors de certaines sollicitations du conducteur ou sur certains états de chaussée. Certaines situations peuvent engendrer une perte de contrôle du véhicule, par exemple un évitement d'obstacle simple ou double. Les pertes de contrôle dans ce cas sont souvent dues à une réponse inadaptée du véhicule car trop vive, pas assez amortie ou encore peu prévisible.

L'invention vise un système de commande anti-roulis assurant une sécurité, une sensation de sécurité, un confort et un plaisir de conduite élevé.

Le procédé de contrôle du roulis d'un véhicule comprenant au moins un actionneur capable d'agir sur le roulis, comprend les étapes suivantes : estimation d'un état de roulis à partir de l'angle de braquage des roues avant, du couple anti-roulis appliqué au véhicule, et de la vitesse, et élaboration une consigne de rejet asymptotique des perturbations agissant sur le roulis. Les perturbations peuvent ainsi être rejetées de façon efficace, d'où une stabilité accrue du véhicule.

Avantageusement, on estime l'état de roulis en fonction de la consigne de l'actionneur et de l'angle de braquage.

Avantageusement, on estime l'état de roulis en fonction de la dynamique de l'actionneur.

Avantageusement, on calcule l'évolution de l'état de roulis en fonction d'une perturbation.

Dans un mode de réalisation, on mesure l'angle de roulis par un capteur et on estime l'état de roulis, à partir de l'angle de roulis mesuré.

Dans un mode de réalisation, on élabore la consigne en fonction de la vitesse du véhicule.

Le dispositif de contrôle du roulis d'un véhicule comprend au moins un actionneur capable d'agir sur le roulis, un module d'estimation d'un état de roulis à partir de l'angle de braquage des roues avant, du couple anti-roulis appliqué au véhicule, et de la vitesse, et un module d'élaboration d'une consigne de rejet asymptotique des perturbations agissant sur le roulis.

Dans un mode de réalisation, les modules sont disposés en boucle fermée.

Dans un mode de réalisation, l'actionneur est relié à une barre anti-roulis pilotable.

Dans un mode de réalisation, l'actionneur est relié à une suspension active.

Le véhicule est pourvu d'un châssis, d'au moins trois roues reliées au châssis, et d'un dispositif de contrôle du roulis d'un véhicule. Le dispositif comprend au moins un actionneur capable d'agir sur le roulis, un module d'estimation d'un état de roulis à partir de l'angle de braquage des roues avant, du couple anti-roulis appliqué au véhicule, et de la vitesse, et un module d'élaboration d'une consigne de rejet asymptotique des perturbations agissant sur le roulis.

L'invention s'applique à des véhicules à quatre roues, deux avant et deux arrière, à trois roues, ou encore à des véhicules à six roues ou plus, dont au moins deux directrices.

L'invention permet à un véhicule d'adopter le comportement le plus stable possible, quel que soit la sollicitation du conducteur ou l'état de la chaussée. On peut tenir compte de certaines situations susceptibles d'engendrer une perte de contrôle du véhicule, comme un évitement d'obstacle simple ou double. L'invention permet de réduire les risques de perte de contrôle dans ce type de cas, qui peuvent être dus à une réponse du véhicule inadaptée car trop vive, pas assez amortie ou encore peu prévisible.

Par ailleurs; l'invention permet un accroissement de la sensation de sécurité, du confort et du plaisir de conduite.

Le système d'anti-roulis actif permet de minimiser, en tenant compte de la vitesse du véhicule, la réponse latérale du véhicule à un coup de volant du conducteur. L'optimisation est faite suivant des critères de sécurité, de confort et d'agrément de conduite.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande selon un aspect de l'invention; et
- la figure 2 est un schéma logique du système selon un aspect de l'invention.

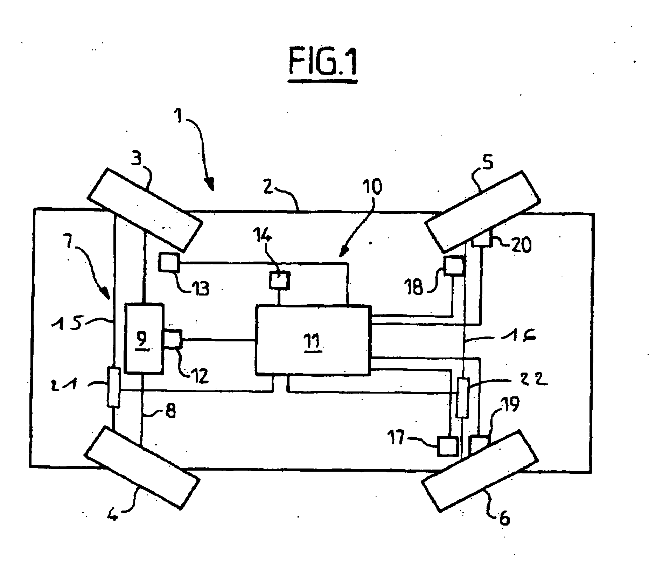

Comme on peut le voir sur la figure 1, le véhicule 1 comprend un châssis 2, deux roues avant directrices 3 et 4 et deux roues arrière 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande anti-roulis 10 comprend une unité de commande 11, un capteur .12 de la position de braquage des roues avant 3 et 4, par exemple positionné sur l'actionneur 9, un capteur 13 de la vitesse de rotation des roues, par exemple avant, permettant de déterminer la vitesse V du véhiculé, et un capteur 14 de l'angle de roulis θ du véhicule, c'est-à-dire l'inclinaison du véhicule autour de son centre de gravité suivant un axe longitudinal.

En outre, le système 10 peut comprendre des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les roues arrière 5 et 6 peuvent être non directrices. Les capteurs de position et de vitesse peuvent être de type optique ou encore magnétique, par exemple à effet Hall, coopérant avec un codeur solidaire d'une partie mobile tandis que le capteur est non tournant.

Le véhicule 1 comprend deux barres anti-roulis 15 et 16 reliant respectivement les roues avant 3 et 4 et les roues arrière 5 et 6. Le système anti-roulis 10 comprend au moins un actionneur tel que représenté ici, deux actionneurs 21 et 22, respectivement associés aux barres anti-roulis avant 15 et arrière 16 et capables d'agir sur lesdites barres 15 et 16 pour former des barres anti-roulis actives à réception d'ordre de commande provenant de l'unité de commande 11. Les actionneurs 21 et 22 sont capables, par exemple, de modifier la raideur des barres anti-roulis 15 et 16 en fonction de la consigne reçue de l'unité de commande 11.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs anti-roulis 21 et 22.

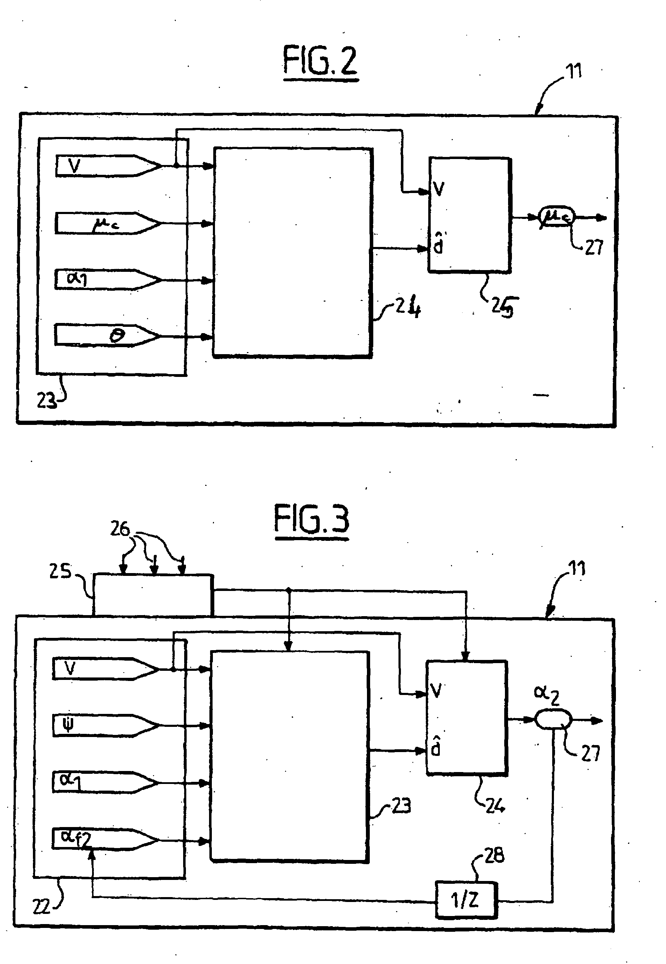

Plus précisément, l'unité de commande 11 comprend un bloc d'entrée 23 recevant les signaux en provenance des capteurs 12 à 14, et notamment la vitesse du véhicule V, l'angle de roulis θ et l'angle de roues avant $\alpha_1$, voir figure 2. La vitesse V du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un observateur d'état 24 permettant d'estimer les informations qui ne sont pas mesurées et qui sont nécessaires à la commande, notamment les perturbations qui agissent sur le véhicule. Le bloc d'entrée 23 fournit à l'observateur d'état 24, la vitesse du véhicule V, l'angle de roulis θ et l'angle de roues avant $\alpha_1$. L'observateur d'état 24 peut par exemple être construit à partir d'un modèle basé sur l'équation simplifiée exprimant le transfert entre l'angle de braquage des roues avant $\alpha_1$ et l'angle de roulis θ de la caisse du véhicule, d'une part, et entre le couple appliqué $\mu_f$ par l'actionneur anti-roulis et l'angle de roulis θ de la caisse du véhicule, d'autre part. Cette équation peut par exemple s'écrire :

$$\left(I_{xx} + Mh_0^2\right)\ddot{\theta} + \left(\frac{E_1^2}{2}c_1 + \frac{E_2^2}{2}c_2\right)\dot{\theta} + \left(\frac{E_1^2}{2}k_1 + \frac{E_2^2}{2}k_2 - Mgh_0\right)\theta = MVh_0\frac{l2}{L}\dot{\alpha}_1 + MV^2\frac{h_0}{L}\alpha_1 + u_f$$

En outre, on peut introduire la dynamique de l'actionneur en distinguant le couple réellement appliqué par l'actionneur $u_f$ du couple commandé $u_c$. On peut exprimer cela comme suit :

$$u_f = \frac{\mu_c}{\tau_a s + 1}$$

L'équation d'état associée à ce modèle est alors :

$$\begin{pmatrix} \dot{\theta}_c \\ \dot{X}_{2,c} \\ \dot{u}_f \end{pmatrix} = \begin{pmatrix} -2\xi\omega_n & 1 & 0 \\ -\omega_n^2 & 0 & G_u \\ 0 & 0 & -\dfrac{1}{\tau_a} \end{pmatrix} \begin{pmatrix} \theta_c \\ X_{2,c} \\ u_f \end{pmatrix} + \begin{pmatrix} G_\alpha \tau \\ G_\alpha \\ 0 \end{pmatrix} \alpha_1 + \begin{pmatrix} 0 \\ 0 \\ \dfrac{1}{\tau_a} \end{pmatrix} u_c$$

$$y = \begin{pmatrix} 1 & 0 & 0 \\ 0 & 1 & 0 \\ 0 & 0 & 1 \end{pmatrix} \begin{pmatrix} \theta_c \\ X_{2,c} \\ u_f \end{pmatrix}$$

avec :

$$G_\alpha = \frac{MV^2 h0}{L\left(I_{xx} + Mh_0^2\right)} \qquad \omega_n = \sqrt{\frac{\frac{1}{2}\left(E_1^2 k_1 + E_2^2 k_2\right) - Mgh_0}{I_{xx} + Mh_0^2}}$$

$$\tau = \frac{L_2}{V} \qquad \xi = \frac{1}{4}\left(\frac{E_1^2 c_1 + E_2^2 c_2}{I_{xx} + Mh_0^2}\right)$$

$$G_u = \frac{1}{\left(I_{xx} + M{h_0}^2\right)}$$

y est la sortie considérée et $X_{2,c}$ est le deuxième état du véhicule en roulis défini par

$$X_{2.c} = 2\xi\omega_n\theta_c + \overset{\curlyvee}{\theta}_c - G_a\tau\alpha_1$$ avec y la sortie considérée, M la masse totale du véhicule, $I_{xx}$ l'inertie de la caisse du véhicule autour de son axe de roulis, c'est-à-dire un axe longitudinal placé plus haut que le sol et pouvant être légèrement incliné vers l'avant, L l'empattement du véhicule, $h_0$ la hauteur du centre de gravité par rapport à l'axe de roulis de la caisse du véhicule, $E_1$ la voie de l'essieu avant, $E_2$ la voie de l'essieu arrière, $\alpha_1$ l'angle de braquage des roues avant, $\theta$ l'angle de roulis de la caisse du véhicule, $\theta_c$ l'angle de roulis de la caisse du véhicule calculé par le modèle, $\theta^Y$ la vitesse de roulis de la caisse du véhicule, $\theta^Y_c$ la vitesse de roulis de la caisse du véhicule calculée par le modèle, $U_c$ le couplé de roulis de consigne et $U_f$ le couple de roulis filtré par la dynamique de l'actionneur et donc réellement appliqué, et $\tau_a$ le temps de réponse de l'actionneur anti-roulis.

On construit ensuite l'observateur en se basant sur le même modèle mais en ajoutant la perturbation au modèle. On peut, par exemple, modéliser la perturbation comme une perturbation échelon caractérisée par l'équation : $d^Y = 0$.

L'équation d'évolution de l'observateur est alors la suivante :

$$
\begin{pmatrix} \overset{\curlyvee}{\theta}_c \\ \overset{\curlyvee}{X}_{2,c} \\ \overset{\curlyvee}{u}_f \\ \overset{\curlyvee}{d} \end{pmatrix}
=
\begin{pmatrix}
-2\xi\omega_n & 1 & 0 & 0 \\
-\omega_n^2 & 0 & G_u & 0 \\
0 & 0 & -\dfrac{1}{\tau_a} & 0 \\
0 & 0 & 0 & 0
\end{pmatrix}
\begin{pmatrix} \hat{\theta}_c \\ \hat{X}_{2,c} \\ \hat{u}_f \\ \hat{d} \end{pmatrix}
+
\begin{pmatrix}
0 & G_a\tau \\
0 & G_a \\
\dfrac{1}{\tau_a} & 0 \\
0 & 0
\end{pmatrix}
\begin{pmatrix} u_c \\ \alpha_1 \end{pmatrix}
+ K_{obs}\,(\theta_{mesuré} - \hat{y})
$$

$$
\hat{y} = \begin{pmatrix} 1 & 0 & 0 & 1 \end{pmatrix}
\begin{pmatrix} \hat{\theta}_c \\ \hat{X}_{2,c} \\ \hat{u}_f \\ \hat{d} \end{pmatrix}
$$

avec ^ qui signifie que les valeurs sont estimées.

On peut remarquer que l'observateur dépend de la vitesse. Il faut noter aussi que $K_{obs}$ est le paramètre de réglage de l'observateur. On peut le calculer pour plusieurs vitesses véhicule et ensuite l'interpoler pour obtenir $K_{obs}$ (V) et obtenir un comportement différent en fonction de la vitesse du véhicule.

Les quatre valeurs estimées $\overset{\curlyvee}{\theta}_c$, $\overset{\curlyvee}{X}_{2,c}$, $\overset{\curlyvee}{u}_f$ et $\overset{\curlyvee}{d}$ fournissent une estimation de l'état du véhicule qui pourrait être utilisée par d'autres éléments de l'unité de commande 11.

L'unité de commande 11 comprend en outre un bloc 25 de rejet asymptotique de perturbation. Le bloc 25 de rejet asymptotique de perturbation permet de rendre la perturbation $\hat{d}$ inobservable par rapport à la sortie considérée, en général l'angle de roulis $\theta$ du véhicule 1. Le bouclage est effectué sur la perturbation $\hat{d}$ estimée par l'observateur d'état 24. L'expression de la commande est alors :

$$u_{rejet} = -G_\alpha \hat{d} = -\frac{\omega_n^2}{G_u} \hat{d}$$

avec, pour rappel, $\omega_n = \sqrt{\dfrac{\frac{1}{2}(E_1^2 k_1 + E_2^2 k_2) - Mgh_0}{I_{xx} + Mh_0^2}}$ et $G_\alpha = \dfrac{1}{I_{xx} + Mh_0^2}$

Le calcul du gain $G_\alpha$ peut être déterminé en utilisant les notions mathématiques classiques de résolution de systèmes linéaires.

L'unité de commande 11 se complète par une sortie 27, qui forme la sortie générale de l'unité de commande et fournit la consigne de couple $u_c$ et la transmet aux actionneurs anti-roulis 21 et 22.

L'invention permet de bénéficier d'une variation de l'action anti-roulis des barres anti-roulis 15 et 16 à des moments voulus, notamment dès que le véhicule est en courbe, et améliore ainsi la tenue de route du véhicule et le confort de conduite éprouvé par le conducteur.

**Revendications**

1. Procédé de contrôle du roulis d'un véhicule (1) comprenant au moins un actionneur (21) capable d'agir sur le roulis, dans lequel on estime un état de roulis à partir de l'angle de braquage des roues ayant, du couple anti-roulis appliqué au véhicule, et de la vitesse, et on élabore une consigne de rejet asymptotique des perturbations agissant sur le roulis.

2. Procédé selon la revendication 1, dans lequel on calcule l'angle de roulis en fonction de la consigne de l'actionneur et de l'angle de braquage.

3. Procédé selon la revendication 2, dans lequel on calcule l'angle de roulis en fonction de la dynamique de l'actionneur.

4. Procédé selon l'une quelconque des revendications précédentes, dans lequel on calcule l'évolution de l'angle de roulis en fonction d'une perturbation.

5. Procédé selon l'une quelconque des revendications 1 à 3, dans lequel on mesure l'évolution de l'angle de roulis par un capteur

6. Procédé selon l'une quelconque des revendications précédentes, dans lequel on élabore la consigne en fonction de la vitesse du véhicule.

7. Dispositif (11) de contrôle du roulis d'un véhicule, le dispositif comprenant au moins un actionneur (21) capable d'agir sur le roulis, un module d'estimation (24) d'un état de roulis à partir de l'angle de braquage des roues avant, du couple anti-roulis appliqué au véhicule, et de la vitesse, et un module d'élaboration (25) d'une consigne de rejet asymptotique des perturbations agissant sur le roulis.

8. Dispositif selon la revendication 7, dans lequel les modules sont disposés en boucle fermée.

9. Dispositif selon la revendication 7 ou 8, dans lequel l'actionneur est relié à une barre anti-roulis pilotable.

10. Dispositif selon la revendication 7 ou 8, dans lequel l'actionneur est relié à une suspension active.

11. Véhicule comprenant un châssis, au moins trois roues reliées au châssis, et un dispositif de contrôle du roulis d'un véhicule, le dispositif comprenant au moins un actionneur capable d'agir sur le roulis, un module d'estimation d'un état de roulis à partir de l'angle de braquage des roues avant, du couple anti-roulis appliqué au véhicule, et de la vitesse, et un module d'élaboration d'une consigne de rejet asymptotique des perturbations agissant sur le roulis.

**Claims**

1. Method of controlling the roll of a vehicle (1) comprising at least one actuator (21) capable of acting on the roll, in which a roll state is estimated on the basis of the angle of deflection of the front wheels, of the anti-roll torque applied to the vehicle, and of the speed, and a setpoint of asymptotic rejection of the disturbances acting on the roll is devised.

2. Method according to Claim 1, in which the angle of roll is computed as a function of the setpoint of the actuator and of the angle of deflection.

3. Method according to Claim 2, in which the angle of roll is computed as a function of the dynamics of the actuator.

4. Method according to any one of the preceding claims, in which the evolution of the angle of roll is computed as a function of a disturbance.

5. Method according to any one of Claims 1 to 3, in which the evolution of the angle of roll is measured by a sensor (14).

6. Method according to any one of the preceding claims, in which the setpoint is devised as a function of the speed of the vehicle.

7. Device (11) for controlling the roll of a vehicle, the device comprising at least one actuator (21) capable of acting on the roll, a module (24) for estimating a roll state on the basis of the angle of deflection of the front wheels, of the anti-roll torque applied to the vehicle, and of the speed, and a module (25) for devising a setpoint of asymptotic rejection of the disturbances acting on the roll.

8. Device according to Claim 7, in which the modules are disposed in closed loop.

9. Device according to Claim 7 or 8, in which the actuator is linked to a controllable anti-roll bar.

10. Device according to Claim 7 or 8, in which the actuator is linked to an active suspension.

11. Vehicle comprising a chassis, at least three wheels linked to the chassis, and a device for controlling the roll of a vehicle, the device comprising at least one actuator capable of acting on the roll, a module for estimating a roll state on the basis of the angle of deflection of the front wheels, of the anti-roll torque applied to the vehicle, and of the speed, and a module for devising a setpoint of asymptotic rejection of the disturbances acting on the roll.

**Patentansprüche**

1. Verfahren zur Steuerung des Wankens eines Fahrzeugs (1), das mindestens einen Stellantrieb (21) enthält, der auf das Wanken einwirken kann, bei dem ein Wankzustand ausgehend vom Einschlagwinkel der Vorderräder, vom auf das Fahrzeug angewendeten Wankstabilisierungs-Drehmoment und von der Geschwindigkeit geschätzt wird, und ein Sollwert der asymptotischen Abweisung der auf das Wanken einwirkenden Störungen erarbeitet wird.

2. Verfahren nach Anspruch 1, bei dem der Wankwinkel abhängig vom Sollwert des Stellantriebs und vom Einschlagwinkel berechnet wird.

3. Verfahren nach Anspruch 2, bei dem der Wankwinkel abhängig von der Dynamik des Stellantriebs berechnet wird.

4. Verfahren nach einem der vorhergehenden Ansprüche, bei dem die Entwicklung des Wankwinkels abhängig von einer Störung berechnet wird.

5. Verfahren nach einem der Ansprüche 1 bis 3, bei dem die Entwicklung des Wankwinkels von einem Sensor (14) gemessen wird.

6. Verfahren nach einem der vorhergehenden Ansprüche, bei dem der Sollwert abhängig von der Geschwindigkeit des Fahrzeugs erarbeitet wird.

7. Vorrichtung (11) zur Steuerung des Wankens eines Fahrzeugs, wobei die Vorrichtung mindestens einen Stellantrieb (21), der auf das Wanken einwirken kann, ein Schätzmodul (24) eines Wankzustands ausgehend vom Einschlagwinkel der Vorderräder, vom an das Fahrzeug angewendeten Wanksteifigkeits-Drehmoment und von der Geschwindigkeit, und ein Erarbeitungsmodul (25) eines Sollwerts der asymptotischen Abweisung der auf das Wanken einwirkenden Störungen enthält.

**8.** Vorrichtung nach Anspruch 7, bei der die Module in geschlossener Schleife angeordnet sind.

**9.** Vorrichtung nach Anspruch 7 oder 8, bei der der Stellantrieb mit einem steuerbaren Querstabilisator verbunden ist.

**10.** Vorrichtung nach Anspruch 7 oder 8, bei der der Stellantrieb mit einer aktiven Aufhängung verbunden ist.

**11.** Fahrzeug, das ein Fahrwerk, mindestens drei mit dem Fahrwerk verbundene Räder und eine Vorrichtung zur Steuerung des Wankens eines Fahrzeugs enthält, wobei die Vorrichtung mindestens einen Stellantrieb, der auf das Wanken einwirken kann, ein Schätzmodul eines Wankzustands ausgehend vom Einschlagwinkel der Vorderräder, vom an das Fahrzeug angewendeten Wanksteifigkeits-Drehmoment und von der Geschwindigkeit, und ein Erarbeitungsmodul eines Sollwerts der asymptotischen Abweisung der auf das Wanken einwirkenden Störungen enthält.

# FIG.1

EP 1 901 932 B1

## FIG.2

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040117085 A
- US 20040117071 A
- EP 1600313 A
- EP 1568521 A
- EP 1346856 A
- US 6354607 B